# FASCICULE DE BREVET EUROPEEN

(11) **EP 2 366 245 B1**
(45) Date de publication et mention de la délivrance du brevet: **02.03.2016**
(21) Numéro de dépôt: 09797085.9
(22) Date de dépôt: 25.11.2009
(51) Int. Cl.: H04M 3/42, H04M 7/00

(54) **TRAITEMENT D'UNE DEMANDE DE MISE EN COMMUNICATION PAR UN DISPOSITIF DE ROUTAGE ASSOCIE A UNE PLURALITE DE TERMINAUX**
VERARBEITUNG EINER ANFORDERUNG, KOMMUNIKATION DURCH EINE ROUTENEINRICHTUNG, DIE MIT MEHREREN ENDGERÄTEN ASSOZIIERT IST, EINZULEITEN
PROCESSING OF A REQUEST TO INSTIGATE COMMUNICATION BY A ROUTING DEVICE ASSOCIATED WITH A PLURALITY OF TERMINALS

(30) Priorité: 28.11.2008 FR 0858135
(43) Date de publication de la demande: 21.09.2011
(73) Titulaire: Orange, 75015 Paris (FR)
(72) Inventeur: BOUVET, Bertrand, F-22700 Perros Guirec (FR)
(74) Mandataire: Millet, Sandrine
(86) Numéro de dépôt international: PCT/FR2009/052292
(87) Numéro de publication internationale: WO 2010/061132

(56) Documents cités:
- EP-A- 1 968 334

## Description

L'invention concerne le domaine des télécommunications et plus particulièrement un procédé et dispositif de traitement d'une demande de mise en communication par un dispositif de routage associé à une pluralité de terminaux.

De nouveaux terminaux de téléphonie numérique sont désormais disponibles avec une qualité vocale supérieure à celle disponible en standard sur les téléphones classiques. Cette qualité vocale est obtenue par mise en oeuvre d'un module de codage de la parole sous forme d'un flux large bande. Ces terminaux supportent donc plusieurs codecs de manière à pouvoir établir une communication avec un terminal quelconque du parc de terminaux existants, notamment avec les terminaux ne disposant que d'un codec en qualité standard.

Ce type de codage, dit "codage large bande", peut s'effectuer conformément à la norme de codage G.722 pour un terminal en VoIP (Voice Over IP), tandis que le codage dit "codage standard" peut être conforme à la norme de codage G.711. Dans le cas d'une communication établie à travers un réseau mobile GSM, des communications large bande sont possibles au moyen d'un codec AMR WB. Des passerelles de conversion sont prévues pour transformer un flux codé selon le standard G.722 en un flux codé selon le standard AMR WB et vice-versa, afin de permettre l'établissement de communications large bande entre un terminal client VoIP équipé d'un codec G.722 et un terminal client mobile équipé d'un codec AMR WB.

En effet, pour bénéficier d'une communication téléphonique de qualité supérieure, il est nécessaire qu'à la fois le terminal appelant et le terminal appelé disposent d'un module de codage large bande, sinon une communication entre ces terminaux ne peut être établie qu'en qualité standard.

En conséquence, en cas d'établissement d'une communication à partir d'un premier terminal équipé d'un codec large bande, seul un deuxième terminal équipé d'un codec large bande pourra établir avec ce premier terminal une communication en qualité large bande.

Il apparaît ainsi le besoin, en cas d'utilisation d'un dispositif de routage de communications pour une pluralité de terminaux, de prendre en compte, lors du routage d'une demande de mise en communication, les capacités respectives des terminaux aptes à établir la communication si l'on souhaite obtenir une qualité de communication maximale.

Le document EP 1 936 334 présente un dispositif de communication permettant au cours d'une communication établie entre un premier terminal parmi une pluralité de premiers terminaux associés à une même identification d'un utilisateur et un second terminal, d'ajouter à la communication déjà en cours un troisième terminal parmi la pluralité de premiers terminaux ou de transférer la communication du premier terminal vers le troisième terminal. Le dispositif de communication détermine parmi les terminaux de la pluralité de premiers terminaux, les terminaux ayant des capacités de communication pouvant être utilisées lors de la communication en cours et envoie une notification indiquant la communication en cours aux terminaux ainsi déterminés. Les terminaux ainsi notifiés proposent à l'utilisateur d'ajouter un des terminaux notifiés à la communication ou de transférer la communication du premier terminal sur un des terminaux notifiés.

Un des buts de l'invention est de remédier à des problèmes, inconvénients, manquements ou insuffisances ou de l'état de la technique et/ou d'y apporter des améliorations.

L'invention concerne, selon un premier aspect, un procédé de traitement d'une demande de mise en communication, reçue par un dispositif de routage associé à une pluralité de terminaux, relative à une communication à établir entre un dispositif émetteur de ladite demande et au moins un desdits terminaux, conformément à la revendication 1.

En conséquence, dans le cas où plusieurs terminaux sont aptes à établir la communication, par exemple dans le cas où ils sont attachés à la même identité publique, il est possible de garder un contrôle sur la qualité de la communication établie effectivement, en favorisant, voire forçant, l'utilisation d'un terminal garantissant une qualité de communication maximale.

Pour favoriser cette communication de qualité maximale, la présentation d'appel se déroule par exemple de telle manière qu'un utilisateur est contraint, au moins temporairement, d'utiliser un des terminaux identifiés pour établir ladite communication ou que cet utilisateur est informé qu'il est recommandé d'utiliser un des terminaux identifiés pour établir ladite communication.

Afin de contraindre l'utilisateur à utiliser un des terminaux identifiés pour établir ladite communication, la notification d'appel est transmise uniquement aux terminaux identifiés, et ce au moins pendant une première phase de l'étape de transmission. En effet, dans une deuxième phase, d'éventuels autres terminaux aptes à établir ladite communication peuvent recevoir cette notification si l'appel n'est pas établi pendant la première phase.

Afin d'informer l'utilisateur qu'il est recommandé d'utiliser un des terminaux identifiés pour établir ladite communication, la notification d'appel transmise aux terminaux identifiés est telle que la présentation d'appel qui est déclenchée à sa réception par le terminal considéré est différente de celle déclenchée sur les éventuels autres terminaux aptes à établir ladite communication.

L'invention est applicable à toute méthode de présentation d'appel: par déclenchement de sonneries et/ou vibrations (mode vibreur dans le cas d'un téléphone mobile), émission de signaux audio et/ou visuels indicateurs d'un appel, affichage d'informations textuelles, etc.

L'invention concerne selon un deuxième aspect un dispositif de traitement d'une demande de mise en communication, reçue par un dispositif de routage associé à une pluralité de terminaux, relative à une communication à établir entre un dispositif émetteur de ladite demande et au moins un desdits terminaux, conformément à la revendication 7.

Les avantages énoncés pour le procédé selon l'invention sont transposables directement au dispositif selon l'invention.

Corrélativement, l'invention concerne un procédé de traitement d'une demande de mise en communication, reçue par un terminal comprenant une pluralité de modules de communication, relative à une communication à établir avec un dispositif émetteur de ladite demande au moyen d'au moins un desdits modules, conformément à la revendication 8.

En complément, l'invention concerne un terminal comprenant une pluralité de modules de communication, recevant une demande de mise en communication relative à une communication à établir avec un dispositif émetteur de ladite demande au moyen d'au moins un desdits modules, conformément à la revendication 9.

Les avantages énoncés pour la mise en oeuvre par un dispositif de routage, recevant un appel destiné à être établi au moyen d'un terminal associé à ce dispositif sont transposables directement à la mis en oeuvre par un terminal comprenant une pluralité de modules de communication et recevant un appel à être établi au moyen d'un des modules de communication, les principes de l'invention restant identiques lorsqu'on est en présence de plusieurs terminaux gérés par un dispositif de routage ou d'un seul terminal gérant plusieurs modules de communication internes.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un dispositif de traitement d'une demande de mise en communication et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et/ou matériels. Dans cette optique, le terme module peut correspondre dans ce document aussi bien à un composant logiciel qu'à un composant matériel ou encore à un composant matériel programmable, avec ou sans processeur intégré. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit pour le module concerné. De la même manière, un composant matériel correspond à tout élément d'un ensemble matériel (ou hardware) apte à mettre en oeuvre une fonction ou un ensemble de fonctions, selon ce qui est décrit pour le module concerné.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un organigramme d'un mode de réalisation du procédé selon l'invention.

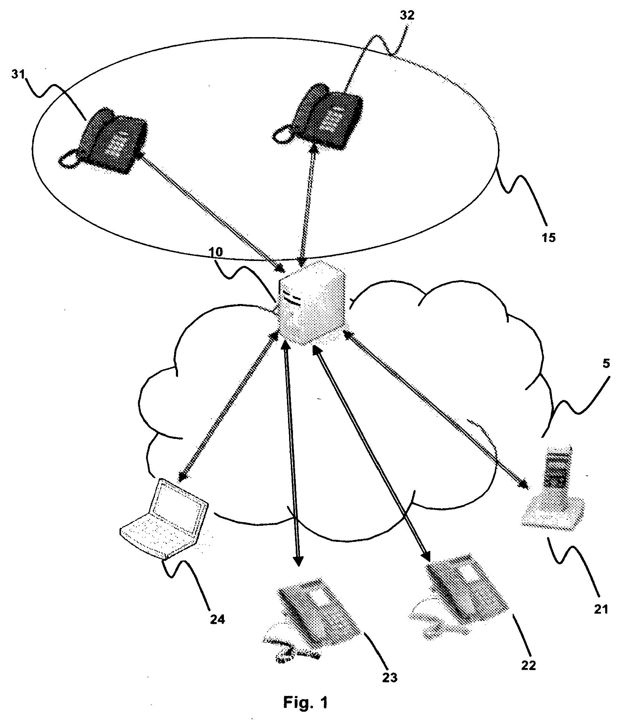

Le système représenté à la figure 1 comprend:
- un réseau local 5;
- un réseau étendu 15, par exemple le réseau Internet;
- une passerelle 10 d'interconnexion entre le réseau local 5 et le réseau 15 étendu;
- une pluralité de terminaux 21 à 24 faisant partie du réseau local 5 et interconnecté avec la passerelle 10 au travers du réseau local 5;
- deux terminaux distants 31 et 32, accédant au réseau étendu 15.

La passerelle 10 d'interconnexion permet aux terminaux 21 à 24 d'accéder au réseau étendu 15, notamment d'établir une communication avec un des terminaux distants 31 ou 32. La passerelle comprend dans ce but un module pour, à la demande d'un terminal du réseau local, transmettre une demande d'établissement d'une communication avec un terminal distant, par exemple un des terminaux 31 et 32.

Inversement, en cas de demande d'établissement d'une communication émise par un des terminaux distants 31 ou 32, la demande de mise en communication est transmise à la passerelle 10 qui joue le rôle de dispositif de routage pour le traitement des communications entrantes dans le réseau local et à destination de l'un quelconque des terminaux 21 à 24.

Les terminaux 21 à 24 peuvent de différents types, par exemple:
- un terminal téléphonique analogique 21;
- un terminal téléphonique numérique DECT standard 22;
- un terminal téléphonique numérique DECT large bande 23;
- un ordinateur personnel 24;

Chacun de ces terminaux est connecté à la passerelle 10 via une interface appropriée de cette passerelle: par exemple via une interface FXS (Foreign exchange Subscriber) dans le cas des terminaux 21 ou 22, ou via une interface USB dans le cas du terminal 23, ou encore via un port Ethernet dans le cas du terminal 24.

La passerelle 10 dialogue avec les terminaux 21 à 24 et gère les communications à établir avec ces terminaux. Elle intercepte notamment les messages de contrôle et de signalisation conformes par exemple au protocole SIP qui sont utilisés pour l'établissement de telles communications. Ces communications peuvent être aussi bien des communications téléphoniques, que visiophoniques, de messagerie instantanée, ou tout type de transmission de données.

Les terminaux distants 31 et 32 sont équipés également d'un module de communication pour l'établissement de communications ainsi que l'envoi et le traitement des messages de contrôle et de signalisation nécessaires.

La suite de la description est faite dans le cas d'application de l'invention à une demande de mise en communication téléphonique.

La passerelle 10 comprend un module de présentation d'appel pour le traitement et la transmission d'une notification d'appel, formant demande de mise en communication, en provenance d'un terminal distant et la mise en oeuvre d'un mode de présentation utilisé pour la présentation de cet appel, afin d'informer un utilisateur de ces terminaux de la demande de mise en communication.

Dans l'état de la technique, il est connu que la passerelle transmette une notification d'appel à tous les terminaux aptes à établir la communication: tous ces terminaux recevant la notification d'appel sonnent à réception de cette notification. La qualité de la communication établie dépend dans ce cas du téléphone appelant et du téléphone au moyen duquel la communication est établie, c'est-à-dire le premier téléphone au moyen duquel un utilisateur décroche.

En supposant que la passerelle 10 transmette la notification d'appel aux terminaux 21 à 23, aptes à établir la communication, deux cas de figure peuvent se présenter.

Dans le premier cas, suite à un appel sortant initié depuis le terminal 31 supportant la qualité améliorée G.722 et la qualité standard G.711, un utilisateur décroche en premier au moyen du terminal 22, non équipé d'un codec large bande: dans ce cas la passerelle renvoie un message de réponse, de type "SIP 200 OK", avec le paramètre SDP positionné sur le mode de codage G.711 pour indiquer que l'appel est accepté et que la qualité sera la qualité standard. A réception de ce message de réponse, le terminal 31 à l'origine de la notification établit la communication en utilisant un mode de codage standard (G.711). En conséquence, l'appelant et l'appelé disposent d'une qualité vocale standard.

Dans le deuxième cas, suite à un appel sortant initié depuis le terminal 31 supportant la qualité améliorée G.722 et la qualité standard G.711, un utilisateur décroche en premier au moyen du terminal 23, équipé d'un codec large bande: dans ce cas la passerelle renvoie un message de réponse, de type "SIP 200 OK", avec le paramètre SDP positionné sur le mode de codage G722 pour indiquer que la communication est acceptée et que la qualité sera en qualité vocale améliorée large bande. A réception de ce message de réponse, le terminal 31 à l'origine de la notification d'appel établit la communication en utilisant un mode de codage large bande (G.722). En conséquence, l'appelant et l'appelé disposent d'une qualité vocale améliorée due à la mise en oeuvre, à la fois par le terminal appelant et par le terminal appelé, d'un codec large bande.

Ainsi, dans l'état de la technique, la qualité de la communication établie dépend du hasard en ce qu'elle dépend du terminal au moyen duquel l'utilisateur décide de décrocher.

L'invention vient répondre à ce problème par la mise en oeuvre d'un mode de présentation visant à inciter un utilisateur à établir prioritairement la communication au moyen d'un des terminaux identifiés comme disposant de capacités permettant d'établir une communication de qualité maximale.

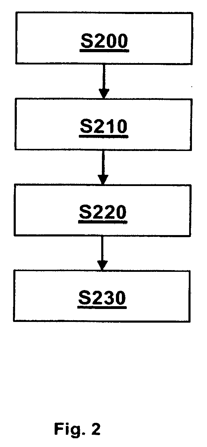

Un mode de réalisation du procédé selon l'invention est décrit plus en détail ci-dessous par référence à la figure 2.

A l'étape 200, une notification d'appel, formant demande de mise en communication, relative à une communication à établir avec l'un des terminaux 21 à 24 est reçue par la passerelle 10. Cette notification est sous forme de message de présentation d'appel, conforme par exemple au protocole SIP et comprenant:
- une identification d'abonné appelant, sous forme usuellement de numéro de ligne téléphonique, cette identification étant en l'occurrence associée au terminal appelant 31 à l'origine de la notification;
- une identification d'un abonné destinataire, sous forme usuellement de numéro de ligne téléphonique, cette identification étant en l'occurrence associée à la passerelle 10 et à l'ensemble des terminaux 21 à 24 gérés par cette passerelle;
- un champ de description de protocole (SDP, Session Description Protocol) qui comprend une liste des codecs supportés par le terminal appelant 31, la liste des codecs étant ordonnée selon un ordre indicatif d'une préférence dans la sélection du codec: un codec C1 étant cité dans la liste avant un codec C2 si le codec C1 doit être sélectionné prioritairement, car permettant notamment d'établir un appel de meilleure qualité que le codec C2; par exemple, lorsque le terminal appelant dispose d'un codec G.711 et d'un codec G.722, le codec large bande G.722 est proposé en premier, le codec qualité standard G.711 étant listé en deuxième.

A l'étape 210, la passerelle 10 obtient, à partir du message reçu à l'étape 200, au moins un paramètre représentatif des capacités de communication du terminal appelant: elle extrait dans ce but le codec apparaissant en premier dans la liste des codecs supportés. D'autres paramètres peuvent également être extraits du message de notification lorsqu'ils sont présents.

A l'étape 220, la passerelle 10 compare le ou les paramètres obtenus à l'étape 210 avec les capacités de communication respectives du ou des terminaux aptes à établir la communication, afin d'identifier, parmi les terminaux compatibles avec le terminal appelant, au moins un terminal disposant de capacités permettant de maximiser la qualité de la communication établie lorsque cette communication est établie avec le terminal considéré.

Lorsque plusieurs terminaux disposent de capacités égales ou équivalentes permettant de maximiser la qualité de la communication, la passerelle 10 peut soit retenir tous ces terminaux, soit en choisir un arbitrairement ou selon un ordre de préférence défini par un utilisateur. Dans tous les cas, la passerelle 10 identifie au moins un terminal, ce terminal étant destiné à être traité différemment lors de la mise en oeuvre de la présentation d'appel de manière à contraindre ou inciter un utilisateur à établir la communication (c'est-à-dire à décrocher) au moyen d'un des terminaux identifiés.

Le mode de transmission par la passerelle de la ou des notifications d'appel et/ou le traitement effectué par le ou les terminaux recevant cette ou ces notifications sont tels que, la présentation d'appel ainsi déclenchée permet à un utilisateur de distinguer le ou les terminaux identifiés à l'étape 220 par rapport aux teminaux non retenus à l'étape 220.

En particulier, la ou les notifications d'appels émises sont propres à déclencher une présentation d'appel permettant à un utilisateur de distinguer les terminaux identifiés lors de l'étape 220 par rapport aux éventuels autres terminaux aptes à établir la communication.

Dans l'exemple décrit, les terminaux équipés d'un codec identique à celui listé en premier dans le message de notification ou compatible avec un tel codec sont identifiés comme répondant à ce critère. Un codec compatible avec le codec G.722 est par exemple un codec AMR WB.

Dans le cas où aucun terminal n'est identifié, le codec listé en deuxième dans le message de notification est considéré afin d'identifier au moins un terminal compatible avec le terminal appelant lorsqu'il utilise ce deuxième codec.

Dans l'exemple décrit, la passerelle identifie le terminal 23 comme étant le seul terminal disposant d'un codec large bande compatible avec le codec large bande déclaré pour le terminal appelant 31.

Les informations sur les capacités des terminaux gérés par la passerelle 10 sont obtenues par la passerelle soit par envoi, à un terminal par la passerelle, d'une requête d'interrogation à laquelle le terminal répond en indiquant ses capacités de communication, soit par envoi à la passerelle par le terminal d'un message de déclaration de ses capacités. De tels messages sont par exemple des messages de type SIP REGISTER. Tout autre format de message ou protocole appropriés est également utilisable. Le message comprend une identification des codecs et/ou formats de codage supportés par le terminal considéré.

A noter que la passerelle pourrait également obtenir la liste des codecs supportés de manière statique par le port de communication utilisé pour connecter un terminal,: par exemple G.711 pour un port FXS, G.722 et G711 pour un port USB.

A l'étape 230, la passerelle 10 transmet la notification vers au moins un des terminaux aptes à établir la communication selon un mode de présentation d'appel visant à inciter un utilisateur à établir prioritairement la communication au moyen d'un des terminaux identifiés lors de l'étape 220 de comparaison. Différentes variantes de réalisation sont décrites ci-dessous pour la mise en oeuvre d'un tel mode de présentation d'appel.

En ce qui concerne le mode de transmission aux terminaux de la notification d'appel ou le mode de présentation d'appel, plusieurs variantes sont possibles quant à la sélection des terminaux auxquels la notification est transmise ou quant à l'ordre dans lequel les notifications sont envoyées aux différents terminaux ou quant au mode de présentation d'appel (choix de la sonnerie déclenchée, dans l'exemple décrit ici) déclenché par ces notifications. Comme décrit plus en détail ci-dessous, le mode de présentation d'appel déclenché par une notification d'appel est fonction du contenu de cette notification d'appel.

Selon une première variante de réalisation, la notification d'appel est transmise d'abord (première phase) aux terminaux identifiés lors de l'étape 220 de comparaison, puis (deuxième phase), après une durée déterminée ou un nombre déterminé de sonneries, aux éventuels autres terminaux aptes à établir la communication. Cette deuxième phase n'est exécutée que si l'appel n'a pas déjà été établi pendant la première phase.

L'utilisateur est ici incité à répondre au moyen d'un des terminaux sonnant en premier, c'est-à-dire ceux recevant en premier la notification d'appel. L'utilisateur est ainsi contraint temporairement, pendant la période de temps pendant laquelle seuls les terminaux identifiés sonnent, à utiliser ces terminaux. En effet, de manière connue, tant qu'aucune notification d'appel n'est transmise à un terminal, la communication ne peut être établie avec ce terminal.

Dans cette première variante, deux modes de réalisation sont possibles quant aux sonneries déclenchées par les terminaux à réception de la notification d'appel.

Dans un premier mode de réalisation, le mode de présentation est tel qu'une sonnerie de notification d'appel différente est utilisée pour les terminaux identifiés lors de l'étape 220 de comparaison, par rapport aux éventuels autres terminaux aptes à établir la communication. Ceci permet d'informer un utilisateur qu'il est recommandé de décrocher au moyen d'un terminal identifié utilisant une sonnerie différente.

Le choix de la sonnerie déclenchée par un terminal est effectué par le terminal lui-même en fonction des informations contenues dans la notification reçue de la passerelle. La simple prise en compte de la liste de codecs présents dans la notification permet en effet de déterminer si le terminal est compatible ou non avec le premier codec de la liste et donc de savoir quelle est la sonnerie à déclencher: sonnerie associée à une qualité standard ou sonnerie associée à une qualité large bande.

Le choix de la sonnerie pourrait également être réalisé par la passerelle 10 pour certains types de terminaux dont la sonnerie peut être commandée à distance. Dans ce cas, la notification d'appel comprend une identification de la sonnerie à utiliser et le terminal déclenche la sonnerie identifiée.

Dans un deuxième mode de réalisation, le mode de présentation est tel que tous les terminaux aptes à établir la communication sonnent avec une sonnerie qui leur est propre (leur sonnerie par défaut par exemple).

Selon une deuxième variante de réalisation, la notification d'appel est transmise uniquement aux terminaux identifiés lors de l'étape 220 de comparaison et non aux éventuels autres terminaux aptes à établir la communication. L'utilisateur est ici forcé de répondre au moyen d'un des terminaux sonnant, c'est-à-dire seuls ceux recevant la notification d'appel.

Dans cette deuxième variante, le mode de présentation est tel que tous les terminaux recevant la notification d'appel peuvent sonner avec une sonnerie qui leur est propre (leur sonnerie par défaut par exemple).

Selon une troisième variante de réalisation, la notification d'appel est transmise à tous les terminaux simultanément, mais avec déclenchement d'une sonnerie de notification d'appel différente pour les terminaux identifiés lors de l'étape 220 de comparaison, par rapport aux éventuels autres terminaux aptes à établir la communication. Ceci permet à un utilisateur d'être informé qu'il est recommandé de décrocher au moyen d'un terminal utilisant une sonnerie différente.

Dans cette troisième variante, deux sonneries différentes devront donc être disponibles pour chaque terminal : soit deux sonneries avec un contenu audio différent chacune, soit un même contenu audio avec deux niveaux sonores différents.

Comme dans la deuxième variante, le choix de la sonnerie déclenchée par un terminal est effectué par le terminal lui-même en fonction des informations contenues dans la notification reçue de la passerelle ou par la passerelle 10 pour les terminaux dont la sonnerie peut être commandée à distance. En particulier, le contenu sonore de la sonnerie à utiliser peut être défini par un fichier stocké par la passerelle ou le terminal.

En outre, en combinaison avec l'une quelconque des variantes décrites ci-dessus, l'utilisateur est informé, lors de la présentation de l'appel, sur un niveau de qualité de communication susceptible d'être obtenu.

Selon une première variante, cette information est effectuée par affichage, par le terminal recevant la notification d'appel, d'un icone représentatif de ce niveau de qualité ou d'un message informant l'utilisateur sur ce niveau de qualité, par exemple "Appel du 0296053859" pour un appel destiné à être établi en qualité standard ou Appel du 0296053859 en qualité large bande" pour un appel destiné à être établi en qualité large bande. Il est entendu que le niveau de qualité de la communication qui sera établie par un terminal destinataire 21 à 24 donné est fonction des capacités de ce terminal. En conséquence, le message / icone affiché par un terminal indique quel est le niveau de qualité de communication qui sera obtenu en cas d'établissement de la communication au moyen de ce terminal. La forme du message / icone est déterminée soit par la passerelle 10 en fonction des informations sur les capacités des terminaux appelants et appelés dont elle dispose, soit par le terminal considéré, en fonction du contenu de la notification reçue de la passerelle à l'étape 230. L'utilisateur peut donc choisir d'établir la communication en fonction des informations affichées, afin de bénéficier de la meilleure qualité de communication possible.

Selon une deuxième variante, cette information est effectuée par affichage, par la passerelle 10 et/ou le ou les terminaux recevant la notification d'appel, d'un icone représentatif du niveau de qualité maximale de codage susceptible d'être utilisé par le terminal appelant ou d'un message informant l'utilisateur sur ce niveau de qualité. En conséquence, le message / icone affiché par un terminal est, dans cette deuxième variante, indépendant des capacités propres à ce terminal, puisqu'il dépend uniquement des capacités déclarées par le terminal appelant. Dans cette variante, l'utilisateur peut également choisir d'établir la communication en fonction des informations affichées, afin de bénéficier de la meilleure qualité de communication possible, mais doit en outre connaître les capacités des différents terminaux pour faire un choix optimum quant à la qualité de la communication établie.

L'invention se généralise au traitement de toute demande de mise en communication émise en vue de l'établissement d'une communication de tout type (audio, vidéo, données, etc) et prenant en compte toute capacité de communication ayant un impact sur la qualité de la communication établie, notamment les capacités de codage des terminaux (paramètres de codage audio, nombre de canaux audio (ex: mono / stéréo), vidéo, taux de compression, bande passante, etc).

L'invention est applicable à tout type de dispositif de routage d'appel, notamment à un dispositif de routage d'appel faisant partie du coeur de réseau d'un réseau téléphonique.

L'invention est applicable à tout type de terminal, y compris un terminal mobile dans l'hypothèse où ce terminal recevrait ses communications via un dispositif de routage d'appel tel que décrit.

L'invention est également applicable à un terminal dit multimodes, c'est-à-dire combinant plusieurs modules de communication et de codage dotés de capacités différentes, par exemple un codec large bande et un codec pour une réception en qualité standard. Dans cette application, le routage d'appel est effectué dans le terminal lui-même, ce terminal remplissant à la fois les fonctions du dispositif de routage 10 et celles des terminaux 21 à 24 et identifiant un module de communication à activer pour recevoir un appel en fonction des capacités déclarées par le terminal appelant. Dans ce cas, le mode de présentation d'appel mis en oeuvre par le terminal est celui décrit en détail ci-dessus pour un terminal large bande lorsque le module de communication activé est un module doté d'un codec large bande permettant d'obtenir une communication de qualité maximale. Inversement, le mode de présentation d'appel mis en oeuvre par le terminal est celui décrit ci-dessus pour un terminal standard lorsque le module de communication activé est un module qui ne permet pas d'obtenir une communication de qualité maximale. Le terminal sonnera notamment de manière différente selon le module de communication utilisé pour établir effectivement la communication.

L'invention est applicable à toute méthode connue de présentation d'appel : par déclenchement de sonneries et/ou vibrations (mode vibreur dans le cas d'un téléphone mobile), émission de signaux audio et/ou visuels indicateurs d'un appel, affichage d'informations textuelles, etc. Les variantes et modes de réalisation décrits ci-dessus sont ainsi transposables sans difficulté au cas d'utilisation d'une méthode de présentation d'appel autre qu'une sonnerie.

## Revendications

1. Procédé de traitement d'une demande de mise en communication, reçue par un dispositif de routage (10) associé à une pluralité de terminaux (21-24), relative à une communication à établir entre un dispositif émetteur (31) de ladite demande et au moins un desdits terminaux, le procédé est **caractérisé en ce qu'**il comprend, préalablement à l'établissement de la communication :
- une étape de comparaison de capacités de communication dudit dispositif émetteur avec des capacités de communication respectives d'un ou de plusieurs terminaux aptes à établir ladite communication, afin d'identifier au moins un terminal disposant de capacités permettant d'établir avec le dispositif émetteur une communication de qualité maximale,
- une étape de transmission à tous les terminaux aptes à établir ladite communication d'une notification d'appel, la notification d'appel étant propre à déclencher sur les terminaux identifiés lors de l'étape de comparaison une présentation d'appel différente de la présentation d'appel déclenchée sur les autres terminaux aptes à établir ladite communication, incitant un utilisateur à utiliser prioritairement un des terminaux identifiés lors de l'étape de comparaison pour établir la communication.

2. Procédé selon la revendication 1 dans lequel la ou les notifications transmises sont propres à déclencher une présentation d'appel permettant à un utilisateur de distinguer les terminaux identifiés lors de l'étape de comparaison par rapport aux éventuels autres terminaux aptes à établir ladite communication.

3. Procédé selon la revendication 1 dans lequel une notification d'appel est transmise, dans une première phase, aux terminaux identifiés lors de l'étape de comparaison, et, dans une deuxième phase, aux éventuels autres terminaux aptes à établir ladite communication.

4. Procédé selon la revendication 1 dans lequel une notification d'appel est transmise uniquement aux terminaux identifiés lors de l'étape de comparaison et non aux éventuels autres terminaux aptes à établir ladite communication.

5. Procédé selon l'une quelconque des revendications précédentes dans lequel ledit utilisateur est informé sur un niveau de qualité de communication susceptible d'être obtenu pour ladite communication.

6. Support d'enregistrement lisible par un processeur de données sur lequel est enregistré un programme comprenant des instructions de code de programme pour l'exécution des étapes d'un procédé selon l'une des revendications 1 à 5.

7. Dispositif de traitement d'une demande de mise en communication, reçue par un dispositif de routage (10) associé à une pluralité de terminaux (21-24), relative à une communication à établir entre un dispositif émetteur (31) de ladite demande et au moins un desdits terminaux, le dispositif de traitement est **caractérisé en ce qu'**il comprend :
- des moyens de comparaison de capacités de communication dudit dispositif émetteur avec des capacités de communication respectives d'un ou de plusieurs terminaux aptes à établir ladite communication, afin d'identifier au moins un terminal disposant de capacités permettant d'établir avec le dispositif émetteur une communication de qualité maximale,
- des moyens de transmission à tous les terminaux aptes à établir ladite communication d'une notification d'appel, la notification d'appel étant propre à déclencher sur les terminaux identifiés lors de l'étape de comparaison une présentation d'appel différente de la présentation d'appel déclenchée sur les autres terminaux aptes à établir ladite communication, incitant un utilisateur à utiliser prioritairement un des terminaux identifiés lors de l'étape de comparaison pour établir la communication, lesdits moyens de comparaison et de transmission étant activés préalablement à l'établissement de la communication.

8. Procédé de traitement d'une demande de mise en communication, reçue par un terminal (23) comprenant une pluralité de modules de communication, relative à une communication à établir avec un dispositif émetteur de ladite demande au moyen d'au moins un desdits modules, le procédé comprenant, préalablement à l'établissement de la communication,
- une étape de comparaison de capacités de communication dudit dispositif émetteur avec des capacités de communication respectives des modules aptes à établir ladite communication, afin d'identifier au moins un module disposant de capacités permettant d'établir avec le dispositif émetteur une communication de qualité maximale,
- une étape de présentation à un utilisateur de ladite demande, le procédé est **caractérisé en ce que** la présentation de la demande est différente selon le module de communication utilisé pour établir la communication, incitant un utilisateur à utiliser prioritairement un des modules identifiés lors de l'étape de comparaison pour établir la communication,.

9. Terminal (23) comprenant une pluralité de modules de communication, recevant une demande de mise en communication relative à une communication à établir avec un dispositif émetteur de ladite demande au moyen d'au moins un desdits modules, le terminal comprenant,
- des moyens de comparaison de capacités de communication dudit dispositif émetteur avec des capacités de communication respectives des modules aptes à établir ladite communication, afin d'identifier au moins un module disposant de capacités permettant d'établir avec le dispositif émetteur une communication de qualité maximale,
- des moyens de présentation à un utilisateur de ladite demande, le terminal est **caractérisé en ce que** les moyens de présentation sont conçus pour présenter de manière différente la demande selon le module de communication utilisé pour établir la communication, incitant un utilisateur à utiliser prioritairement un des modules identifiés lors de l'étape de comparaison pour établir la communication, lesdits moyens de comparaison et de présentation étant activés préalablement à l'établissement de la communication.

## Patentansprüche

1. Verfahren zur Verarbeitung einer Verbindungsanforderung, die von einer einer Vielzahl von Endgeräten (21-24) zugeordneten Routingvorrichtung (10) bezüglich einer zwischen einer Sendevorrichtung (31) der Anforderung und mindestens einem der Endgeräte aufzubauenden Verbindung empfangen wird, wobei das Verfahren **dadurch gekennzeichnet ist, dass** es vor dem Aufbau der Verbindung enthält:
- einen Schritt des Vergleichs von Verbindungskapazitäten der Sendevorrichtung mit jeweiligen Verbindungskapazitäten eines oder mehrerer Endgeräte, die fähig sind, die Verbindung aufzubauen, um mindestens ein Endgerät zu erkennen, das über Kapazitäten verfügt, die es ermöglichen, eine Verbindung maximaler Qualität mit der Sendevorrichtung aufzubauen,
- einen Schritt der Übertragung einer Anrufbenachrichtigung an alle Endgeräte, die fähig sind, die Verbindung aufzubauen, wobei die Anrufbenachrichtigung geeignet ist, in den im Vergleichsschritt erkannten Endgeräten eine Anrufpräsentation auszulösen, die sich von der Anrufpräsentation unterscheidet, die in den anderen Endgeräten ausgelöst wird, die fähig sind, die Verbindung aufzubauen, was einen Benutzer veranlasst, prioritär eines der im Vergleichsschritt erkannten Endgeräte zu benutzen, um die Verbindung aufzubauen.

2. Verfahren nach Anspruch 1, wobei die übertragene(n) Benachrichtigung(en) geeignet sind, eine Anrufpräsentation auszulösen, die es einem Benutzer erlaubt, die im Vergleichsschritt erkannten Endgeräte in Bezug auf die möglichen anderen Endgeräten zu unterscheiden, die fähig sind, die Verbindung aufzubauen.

3. Verfahren nach Anspruch 1, wobei eine Anrufbenachrichtigung in einer ersten Phase an die im Vergleichsschritt erkannten Endgeräte und in einer zweiten Phase an die möglichen anderen Endgeräte übertragen wird, die fähig sind, die Verbindung aufzubauen.

4. Verfahren nach Anspruch 1, wobei eine Anrufbenachrichtigung nur an die im Vergleichsschritt erkannten Endgeräte und nicht an die möglichen anderen Endgeräte übertragen wird, die fähig sind, die Verbindung aufzubauen.

5. Verfahren nach einem der vorhergehenden Ansprüche, wobei der Benutzer über ein Verbindungsqualitätsniveau informiert wird, das durch die Verbindung erhalten werden kann.

6. Prozessorlesbarer Aufzeichnungsträger, auf dem ein Programm aufgezeichnet ist, das Programmcodeanweisungen für die Ausführung der Schritte eines Verfahrens nach einem der Ansprüche 1 bis 5 enthält.

7. Vorrichtung zur Verarbeitung einer Verbindungsanforderung, die von einer einer Vielzahl von Endgeräten (21-24) zugeordneten Routingvorrichtung (10) bezüglich einer zwischen einer Sendevorrichtung (31) der Anforderung und mindestens einem der Endgeräte aufzubauenden Verbindung empfangen wird, wobei die Verarbeitungsvorrichtung **dadurch gekennzeichnet ist, dass** sie enthält:
- Einrichtungen zum Vergleich von Verbindungskapazitäten der Sendevorrichtung mit jeweiligen Verbindungskapazitäten eines oder mehrerer Endgeräte, die fähig sind, die Verbindung aufzubauen, um mindestens ein Endgerät zu erkennen, das über Kapazitäten verfügt, die es ermöglichen, mit der Sendevorrichtung eine Verbindung maximaler Qualität aufzubauen,
- Einrichtungen zur Übertragung einer Anrufbenachrichtigung an alle Endgeräte, die fähig sind, die Verbindung aufzubauen, wobei die Anrufbenachrichtigung geeignet ist, in den im Vergleichsschritt erkannten Endgeräten eine Anrufpräsentation auszulösen, die sich von der Anrufpräsentation unterscheidet, die in den anderen Endgeräten ausgelöst wird, die fähig sind, die Verbindung aufzubauen, was einen Benutzer veranlasst, prioritär eines der im Vergleichsschritt erkannten Endgeräte zu benutzen, um die Verbindung aufzubauen, wobei die Vergleichs- und Übertragungseinrichtungen vor dem Aufbau der Verbindung aktiviert werden.

8. Verfahren zur Verarbeitung einer Verbindungsanforderung, die von einem eine Vielzahl von Verbindungsmodulen enthaltenden Endgerät (23) bezüglich einer mit einer Sendevorrichtung der Anforderung mittels mindestens eines dieser Module aufzubauenden Verbindung empfangen wird, wobei das Verfahren vor dem Aufbau der Verbindung enthält
- einen Schritt des Vergleichs von Verbindungskapazitäten der Sendevorrichtung mit jeweiligen Verbindungskapazitäten der Module, die fähig sind, die Verbindung aufzubauen, um mindestens ein Modul zu erkennen, das über Kapazitäten verfügt, die es ermöglichen, mit der Sendevorrichtung eine Verbindung maximaler Qualität aufzubauen,
- einen Schritt des Präsentierens der Anforderung an einen Benutzer,
wobei das Verfahren **dadurch gekennzeichnet ist, dass** die Präsentation der Anforderung je nach dem für den Aufbau der Verbindung verwendeten Verbindungsmodul unterschiedlich ist, was einen Benutzer veranlasst, prioritär eines der im Vergleichsschritt erkannten Module zum Aufbau der Verbindung zu verwenden.

9. Endgerät (23), das eine Vielzahl von Verbindungsmodulen enthält, das eine Verbindungsanforderung bezüglich einer mit einer Sendevorrichtung der Anforderung mittels mindestens eines der Module aufzubauenden Verbindung empfängt, wobei das Endgerät enthält
- Einrichtungen zum Vergleich von Verbindungskapazitäten der Sendevorrichtung mit jeweiligen Verbindungskapazitäten der Module, die fähig sind, die Verbindung aufzubauen, um mindestens ein Modul zu erkennen, das über Kapazitäten verfügt, die es ermöglichen, mit der Sendevorrichtung eine Verbindung maximaler Qualität aufzubauen,
- Einrichtungen zum Präsentieren der Anforderung an einen Benutzer,
wobei das Endgerät **dadurch gekennzeichnet ist, dass** die Präsentationseinrichtungen konzipiert sind, die Anforderung je nach dem zum Aufbau der Verbindung verwendeten Verbindungsmodul unterschiedlich zu präsentieren, was einen Benutzer veranlasst, prioritär eines der im Vergleichsschritt erkannten Module für den Aufbau der Verbindung zu verwenden, wobei die Vergleichs- und Präsentationseinrichtungen vor dem Aufbau der Verbindung aktiviert werden.

## Claims

1. Method for processing a request to instigate communication, received by a routing device (10) associated with a plurality of terminals (21-24), relating to a communication to be established between a sender device (31) issuing said request and at least one of said terminals, the method being **characterized in that** it comprises, prior to the establishing of the communication:
- a step of comparing communication capabilities of said sender device with respective communication capabilities of one or more terminals that are able to establish said communication, so as to identify at least one terminal having capabilities making it possible to establish with the sender device a communication of maximum quality,
- a step of transmitting to all the terminals able to establish said communication a call notification, the call notification being able to trigger on the terminals identified during the step of comparing a different call presentation from the call presentation triggered on the other terminals able to establish said communication, prompting a user to use by priority one of the terminals identified during the comparison step to establish the communication.

2. Method according to Claim 1, in which the transmitted notification or notifications are suitable for triggering a call presentation allowing a user to distinguish the terminals identified during the comparison step with respect to any other terminals that are able to establish said communication.

3. Method according to Claim 1, in which a call notification is transmitted, in a first phase, to the terminals identified during the comparison step, and, in a second phase, to any other terminals that are able to establish said communication.

4. Method according to Claim 1, in which a call notification is transmitted solely to the terminals identified during the comparison step and not to any other terminals that are able to establish said communication.

5. Method according to any one of the preceding claims, in which said user is informed about a level of communication quality liable to be obtained for said communication.

6. Recording medium readable by a data processor on which is recorded a program comprising program code instructions for the execution of the steps of a method according to one of Claims 1 to 5.

7. Device for processing a request to instigate communication, received by a routing device (10) associated with a plurality of terminals (21-24), relating to a communication to be established between a sender device (31) issuing said request and at least one of said terminals, the processing device being **characterized in that** it comprises:
- means for comparing communication capabilities of said sender device with respective communication capabilities of one or more terminals that are able to establish said communication, so as to identify at least one terminal having capabilities making it possible to establish with the sender device a communication of maximum quality,
- means for transmitting to all the terminals able to establish said communication a call notification, the call notification being able to trigger on the terminals identified during the step of comparing a different call presentation from the call presentation triggered on the other terminals able to establish said communication, prompting a user to use by priority one of the terminals identified during the comparison step to establish the communication, said means of comparing and of transmitting being activated prior to the establishing of the communication.

8. Method for processing a request to instigate communication, received by a terminal (23) comprising a plurality of communication modules, relating to a communication to be established with a sender device issuing said request by means of at least one of said modules, the method comprising, prior to the establishing of the communication,
- a step of comparing communication capabilities of said sender device with respective communication capabilities of the modules that are able to establish said communication, so as to identify at least one module having capabilities making it possible to establish with the sender device a communication of maximum quality,
- a step of presenting said request to a user, the method being **characterized in that** the presentation of the request is different depending on the communication module used to establish the communication, prompting a user to use by priority one of the modules identified during the comparison step to establish the communication.

9. Terminal (23) comprising a plurality of communication modules, receiving a request to instigate communication relating to a communication to be established with a sender device issuing said request by means of at least one of said modules, the terminal comprising,
- means for comparing communication capabilities of said sender device with respective communication capabilities of the modules that are able to establish said communication, so as to identify at least one module having capabilities making it possible to establish with the sender device a communication of maximum quality,
- means for presenting said request to a user, the terminal being **characterized in that** the presentation means are designed to present in a different manner the request depending on the communication module used to establish the communication, prompting a user to use by priority one of the modules identified during the comparison step to establish the communication, said means of comparing and of presenting being activated prior to the establishing of the communication.
